Europäisches Patentamt

European Patent Office

Office européen des brevets

(11) Numéro de publication: **0 269 925 B1**

(12) **FASCICULE DE BREVET EUROPEEN**

(45) Date de publication de fascicule du brevet: **29.07.92**

(51) Int. Cl.5: **G02B 6/38**, B25J 7/00, F16C 11/12

(21) Numéro de dépôt: **87116715.1**

(22) Date de dépôt: **12.11.87**

(54) **Dispositif de déplacement de l'extrémité d'une fibre optique suivant deux axes orthogonaux.**

(30) Priorité: **18.11.86 FR 8616007**

(43) Date de publication de la demande:
**08.06.88 Bulletin 88/23**

(45) Mention de la délivrance du brevet:
**29.07.92 Bulletin 92/31**

(84) Etats contractants désignés:
**BE CH DE ES FR GB IT LI NL**

(56) Documents cités:
EP-A- 0 100 781    EP-A- 0 193 991
DE-A- 1 960 401    FR-A- 2 487 527
FR-A- 2 548 390    GB-A- 2 080 471

(73) Titulaire: **ALCATEL FIBRES OPTIQUES**
**35 rue Jean Jaurès, BP 20**
**F-95871 Bezons Cedex(FR)**

(72) Inventeur: **Le Pivert, Hervé**
**2bis, rue de Varize**
**F-75016 Paris(FR)**
Inventeur: **De Keyser, Bernard**
**61, Place d'Armes**
**F-62100 Calais(FR)**
Inventeur: **Normand, Gérard**
**6, rue Einstein**
**F-25051 Besançon(FR)**

(74) Mandataire: **Weinmiller, Jürgen et al**
**Lennéstrasse 9 Postfach 24**
**W-8133 Feldafing(DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un dispositif de déplacement de l'extrémité d'une fibre optique suivant deux axes orthogonaux, permettant l'alignement de cette fibre optique avec un autre élément optique, comportant un bâti sur lequel est maintenu l'élément optique, et un solide déformable non articulé à lames minces sur lequel est fixée la fibre optique à aligner.

On sait que la non-coïncidence des axes de deux fibres optiques raccordées l'une à l'autre, par exemple par soudage, est une des principales causes de pertes de transmission le long d'une liaison optique à grande distance. Cette exigence d'une excellente coïncidence des axes, déjà importante pour les fibres optiques multimodes, devient essentielle pour les fibres optiques monomodes dont le coeur est de diamètre notablement plus faible, de l'ordre de la dizaine de microns.

On a d'abord utilisé pour le raccordement des fibres optiques des dispositifs de déplacement micrométrique par glissières mues elles même par des vis de commande à pas très fins, ces glissières étant croisées ou superposées de manière à permettre des déplacements dans toutes les directions de l'espace. Mais on s'est rapidement aperçu que les jeux existants entre ces glissières ne permettaient pas d'obtenir les précisions de l'ordre du dixième de micromètre imposées en particulier pour le raccordement des fibres optiques monomodes.

On a alors essayé de remplacer les dispositifs à glissières par des dispositifs de déplacement utilisant des solides déformables.

On connaît, notamment par le document FR-A 2 548 390, un dispositif dont le solide déformable est une poutre encastrée travaillant en flexion sous l'action de cales piézoélectriques selon deux plans orthogonaux. Cette poutre comporte, le long de son axe, une succession d'évidements perpendiculaires formant des lames minces. Cette succession d'évidements le long de l'axe d'une poutre encastrée provoque des déplacements angulaires parasites de l'extrémité de la fibre optique qui nuisent au bon alignement de ladite fibre optique avec l'élément optique à raccorder.

On connaît aussi, selon le document GB 2 080 471, un micromanipulateur à doubles lames minces jouant le rôle de ressort, disposées selon les faces d'un parallélépipède, les arêtes du parallélépipède étant constituées de blocs prismatiques dans lesquels sont encastrées les lames minces.

La précision des déplacements obtenus avec un tel dispositif n'est pas suffisante. En effet, il est très difficile de fixer les lames minces sur les blocs prismatiques d'angle sans aucun jeu angulaire ou longitudinal. De plus les lames ont une section droite constante et la contrainte de flexion varie le long de la lame. Elle a la valeur maximum au voisinage immédiat de blocs d'angle. Aussi, une partie de la matière dans la zone médiane des lames est non seulement inutile mais nocive, car elle diminue la déformation de la lame soumise à un effort déterminé.

La présente invention a pour but de procurer un dispositif de déplacement de l'extrémité d'une fibre optique, qui comporte un solide déformable à lames minces fait d'une seule pièce et en celà du type de celui connu par le premier document ci-avant, pour supprimer tous défauts géométriques dûs à l'assemblage de plusieurs pièces distinctes et toute possibilité de mouvement d'une pièce par rapport à une autre, mais qui assure une meilleure précision que ce dispositif connu et notamment évite une rotation intempestive de l'extrémité de la fibre optique.

Le dispositif selon l'invention est défini par la revendication 1.

Il répond, en outre, à au moins l'une des caractéristiques suivantes :
- La section des lames minces décroit depuis chaque extrémité jusqu'à la zone située à égale distance des extrémités.
- La loi de décroissance de la section des lames est telle que la contrainte dans le matériau soit à peu près la même dans toute section droite de la lame.
- Chaque face du parallélépipède est constituée par une lame mince unique.
- Chaque face du parallélépipède est constituée par deux lames minces parallèles dont les profils sont symétriques l'un de l'autre par rapport au plan équidistant des deux lames.
- Entre chaque extrémité d'une diagonale constituant un point d'appui et chaque moyen de déplacement, est intercalé un élément flexible sensiblement parallèle à une lame mince.

Il est décrit ci-après à titre d'exemple et en référence au dessin annexé, un dispositif de déplacement selon l'invention dans lequel l'élément optique est une autre fibre optique, ce dispositif étant principalement utilisé pour le soudage bout à bout de deux fibres optiques.

La figure 1 montre le dispositif en coupe longitudinale.

La figure 2 montre, en vue de face, un premier mode de réalisation du solide déformable.

La figure 3 montre, en vue de face, un deuxième mode de réalisation du solide déformable.

La figure 4 montre de manière plus détaillée, une demi-vue de la figure 3.

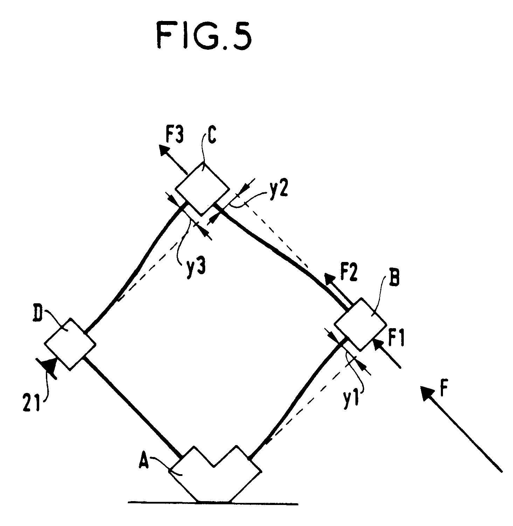

La figure 5 montre de manière schématique, un parallélépipède déformé sous l'action d'une force F décomposée en trois forces $F_1$, $F_2$, $F_3$.

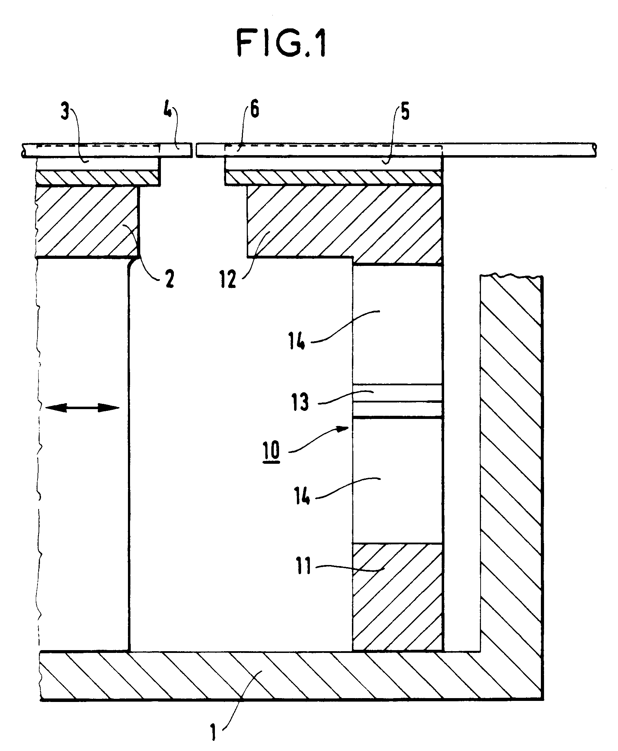

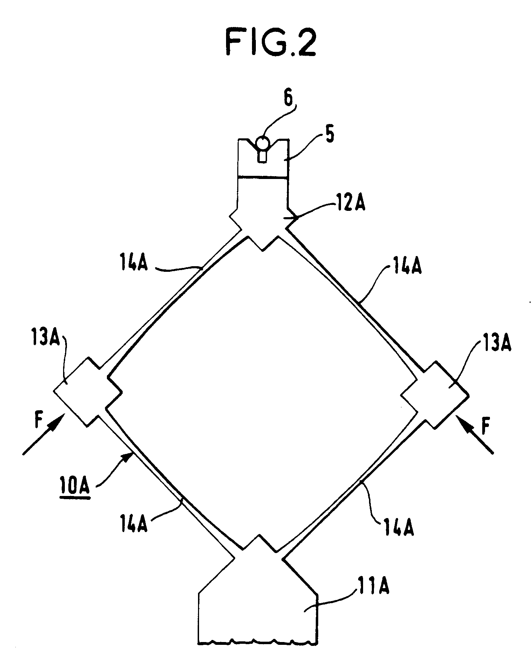

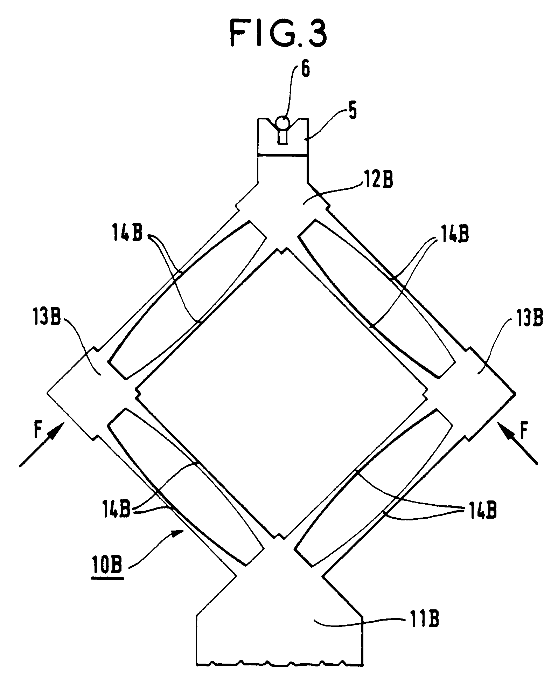

Dans la figure 1, le dispositif comporte un châssis fixe 1, un support 2 coulissant sur le châssis 1, et un solide déformable 10 monobloc comportant quatre blocs prismatiques et quatre côtés constitués de lames minces 14. Les quatre blocs prismatiques sont, un socle 11 fixé sur le bâti 1, un bloc-support 12, et deux blocs de manoeuvre 13. Ces blocs de manoeuvre 13 et les lames minces 14 sont bien visibles en figures 2 et 3.

Le support 2 comporte un vé 3 dans lequel est posée la fibre optique 4. Le bloc-support 12 du solide déformable 10 comporte un vé 5 dans lequel est posée la fibre optique 6 à aligner. Les deux fibres optiques sont bien entendu maintenues dans leur vé par des moyens connus non représentés.

Le solide déformable 10 permet donc d'aligner la fibre optique 6 avec la fibre optique 4 par déplacement de l'extrémité de la fibre optique 6 selon deux plans orthogonaux, et le déplacement longitudinal du support 2 selon un troisième plan orthogonal aux deux autres, permet d'approcher la fibre 4 de la fibre 6.

La figure 2 montre le premier mode de réalisation du solide déformable 10A dont la section droite comporte quatre côtés constitués chacun d'une seule lame mince 14A.

Les quatre lames minces 14A forment un carré dont une extrémité de la diagonale verticale est constituée par le socle 11A, l'autre extrémité étant constituée par le bloc-support 12A, et dont chaque extrémité de la diagonale horizontale est constituée par un bloc de manoeuvre 13A. Les extrémités des lames minces sont perpendiculaires aux faces des blocs et leur section droite présente un amincissement au milieu, leur profil représentant ainsi celui de deux poutres d'égale résistance placées tête-bêche et réunies par leurs extrémités amincies. De la sorte la contrainte du matériau est à peu près identique dans toute section droite des lames. Chaque bloc de manoeuvre 13A subit une poussée de la part d'un moyen de déplacement quelconque, vis micromètrique ou cale piézoélectrique par exemple, selon le sens de la force F.

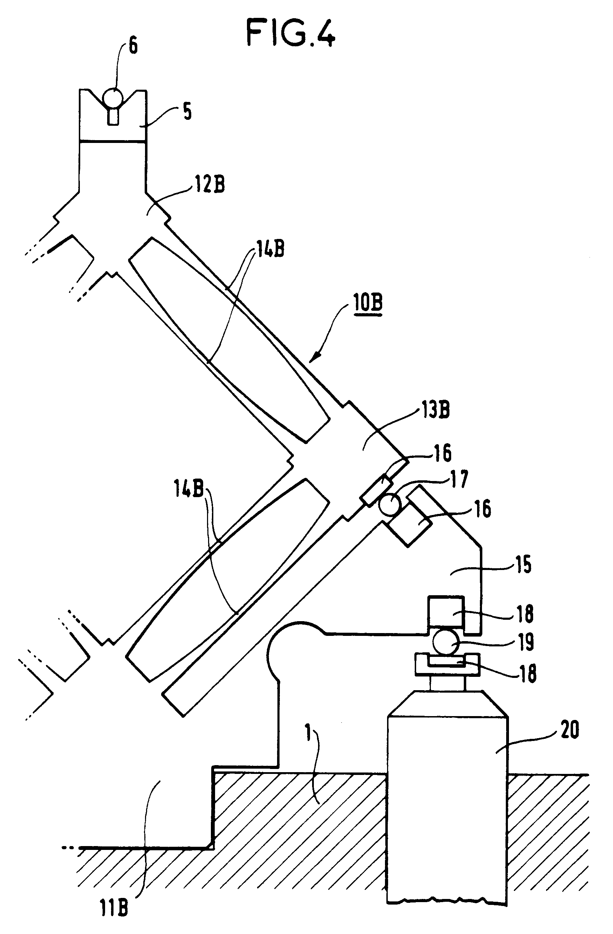

Les figures 3 et 4 montrent le deuxième mode de réalisation du solide déformable 10B.

La figure 3 montre le solide 10B comportant quatre côtés constitués chacun de deux lames minces parallèles 14B.

Les quatre groupes de deux lames minces parallèles 14B forment un carré dont une extrémité de la diagonale verticale est constituée par le socle 11B, l'autre extrémité étant constituée par ce bloc-support 12B, et dont chaque extrémité de la diagonale horizontale est constituée par un bloc de manoeuvre 13B. Les extrémités des lames minces sont perpendiculaires aux faces des blocs et leur section droite présente un amincissement au milieu, leur profil représentant ainsi celui de deux poutres d'égale résistance placées tête-bêche et réunies par leurs extrémités amincies. Dans un même groupe de lames minces les profils des lames sont symétriques l'un de l'autre par rapport au plan équidistant des deux lames. Chaque bloc de manoeuvre subit une poussée de la part d'un moyen de déplacement quelconque selon le sens de la force F.

La figure 4 montre un moyen de déplacement particulier constitué par une cale piézoélectrique 20 et un élément flexible intermédiaire 15, la forme particulière de cet élément flexible 15 permettant de placer la cale 20 verticalement pour limiter l'encombrement du dispositif. La liaison mécanique entre le bloc de manoeuvre 13B et l'élément 15 est réalisée par deux plots 16 enserrant un cylindre 17, et la liaison mécanique entre l'élément flexible 15 et la cale piézoélectrique 20 est réalisée par deux plots 18 enserrant un cylindre 19. L'utilisation d'un cylindre enserré entre deux plots permet d'obtenir une poussée purement linéaire.

Le fontionnement du dispositif selon l'invention est explicité au regard de la figure schématique 5.

Dans ce dispositif, le parallélépipède, de section carrée, est formé de quatre lames minces perpendiculaires entre elles et de quatre blocs prismatiques, un bloc A étant fixé sur le socle de l'appareil, un bloc C supportant la fibre optique et subissant les déplacements transversaux infligés aux blocs B et D par les forces appliquées suivant deux directions perpendiculaires respectivement aux côtés AB et AD.

On considèrera séparément les déplacements provoqués par chacune des forces appliquées, et notamment la force F appliquée au bloc B. Cette force provoque le déplacement du bloc B, ainsi que celui du bloc C, tandis que le bloc D demeure immobilisé sur la direction AD initiale par une butée 21.

Cette force F peut être décomposée en trois forces $F_1$, $F_2$ et $F_3$ de même direction, $F_1$ provoquant la flexion du côté AB, $F_2$ le flambage du côté BC et $F_3$ la flexion du côté DC. Les déplacements latéraux par rapport aux directions initiales au repos sont désignés respectivement $Y_1$, $Y_2$ et $Y_3$.

Le déplacement Y1 est, en théorie, celui de l'extrémité d'une poutre encastrée à ses deux extrémités, l'une fixe, l'autre pouvant se déplacer suivant une direction perpendiculaire à l'axe initial de la poutre. Un calcul de résistance des matériaux donne la flèche

EP 0 269 925 B1

$$Y_{1_o}$$

d'une poutre de longueur $\ell$ et de section droite uniforme soumise à son extrémité libre à une force $F_1$ perpendiculaire à l'axe de la poutre :

$$Y_{1_o} = \frac{F_1 \ell^3}{12 \, E \, I_o}$$

Dans cette formule E désigne le module d'élasticité du matériau et $I_o$ le moment d'inertie.

Dans le cas présent où la section des lames est formée de deux profils d'égale résistance montés tête-bêche, le calcul de résistance des matériaux montre que la flexion de la poutre obtenue est double de celle d'une poutre de section droite uniforme. Le moment d'inertie $I_o$ est alors calculé au niveau d'un "encastrement", cet "encastrement" étant, dans ce cas présent, l'extrémité d'une lame. La flexion réelle observée est alors :

$$Y_1 = \frac{F_1 \ell^3}{6 \, E \, I_o}$$

Le déplacement Y2 est, en théorie, celui qui est dû au flambage d'une poutre de section droite uniforme sous l'action de la force $F_2$ agissant sur le bloc B, les deux extrémités B et C étant encastrées et astreintes à garder une orientation sensiblement fixe.

$Y_2$ est calculable à partir de l'ouvrage : "Statique et résistance des matériaux" de P. MONTEL, par la formule :

$$Y_{2_o} = 2 \sqrt{2 \frac{\ell}{\pi}} \sqrt{\frac{F_2 - F_o}{F_o}}$$

$F_o$ étant la force critique donnée par la formule

$$F_o = 4\pi^2 \frac{E \, I_o}{\ell^2}$$

Si la force $F_2$ appliquée est inférieure à $F_o$, il n'y a pas de flambage et le côté BC n'est pas déformé.

Le déplacement $Y_2$, dans le cas où la section des lames est formée de deux profils d'égale résistance, est double de la valeur précédente, d'où :

4

$$Y_2 = 4\sqrt{2}\,\frac{\ell}{\pi}\sqrt{\frac{F_2 - F_0}{F_0}}$$

Toutefois si la force $F_2$ n'est pas supérieure à $F_0$ il n'y a pas flambage et $Y_2 = 0$.

Le déplacement Y3, sous l'action de $F_3$, est de même nature que celui du bloc B sous l'action de la force $F_1$ et se calcule par la formule :

$$Y_3 = \frac{F_3\,\ell^3}{6\;E\;I_0}$$

Les déplacements $Y_1$, $Y_2$ et $Y_3$ seront donc calculables à partir des trois forces appliquées $F_1$, $F_2$ et $F_3$ assujetties à la relation $F_1 + F_2 + F_3 = F$, à partir de la longueur l des lames, du moment d'inertie $I_0$ calculé au niveau des extrémités des lames et du module d'élasticité E du matériau.

Le seul problème à résoudre est celui du calcul des forces $F_1$, $F_2$ et $F_3$.

Dans le cas où il n'y a pas de flambage du côté BC, ce qui est vrai pour de très petits déplacements, surtout dans le cas où les lames sont doubles, on peut admettre $F_2 = 0$ et $F_1 = F_3 = \frac{F}{2}$.

d'où

$$Y_1 = Y_3 = \frac{F\,\ell^3}{12\;E\;I_0}$$

Le moment d'inertie $I_0$ est calculable à partir de la largeur b des lames et de leur épaisseur h au voisinage de leurs extrémités, par la formule :

$$I_0 = \frac{bh^3}{12},$$

d'où la
formule résultante liant le déplacement $Y_1$ à la force F :

$$Y_1 = \frac{F\,\ell^3}{E\;bh^3}$$

Le solide déformable est constitué d'une seule pièce faite d'un matériau isotrope sans aucun assemblage de pièces distinctes. Il n'y a donc aucune possibilité de déplacement de l'extrémité des lames par rapport aux blocs prismatiques auxquels elles sont reliées.

Donc, dans le cas où il n'y a pas de flambage de la lame BC sous l'action de la force F appliquée en B, le côté BC demeure sensiblement parallèle au côté AD qui est immobilisé au repos par la cale 21, de sorte que le déplacement transversal infligé au bloc C qui supporte la fibre optique s'effectue dans une direction fixe, sans rotation parasite autour de la direction initiale, au moins au second ordre près.

Il en est de même quand c'est la cale située en D qui est activée, le déplacement étant alors perpendiculaire au premier et dirigé suivant DC, sans rotation par rapport à la direction initiale.

Ceci confirme le fait que, dans un tel montage la fibre optique positionnée sur le vé solidaire du bloc C, donc solidaire du bloc 12A ou 12B selon le mode de réalisation, ne subit pas de rotation par rapport à son plan de polarisation initial. Ceci est très important dans le cas de fibres optiques monomodes dont on sait, qu'en fait, elles sont susceptibles de propager une infinité de modes déduits les uns des autres par rotation autour de l'axe de la fibre. Or celle-ci présente, soit par imperfection naturelle, soit par construction (biréfringence accidentelle, ou voulue dans le cas de fibres à maintien de polarisation), des caractéristiques optiques différentes suivant l'orientation du plan de polarisation, ce qui est extrêmement gênant pour la transmission de signaux à large bande et impose une limitation de la bande de fréquences transmise beaucoup plus drastique que celle que l'on peut déduire des autres caractéristiques de la fibre. D'où l'énorme avantage présenté par un tel dispositif lors du raccordement de deux fibres monomodes entre elles.

**Revendications**

1.  Dispositif de déplacement de l'extrémité d'une fibre optique (6) suivant deux axes orthogonaux, permettant l'alignement de cette fibre optique (6) avec un autre élément optique (4), comportant un bâti (1) sur lequel l'élément optique (4) est susceptible d'être maintenu, et un solide déformable (10A, 10B) non-articulé à lames minces (14A, 14B) sur lequel la fibre optique (6) à aligner est susceptible d'être fixée, le solide déformable étant fait d'une seule pièce, caractérisé en ce que les parties du solide déformable en forme de lames minces (14A, 14B) sont disposées selon les faces d'un parallélépipède dont la section droite, carrée au repos, est perpendiculaire à l'axe de la fibre optique (6) susceptible d'y être fixée, a l'une de ses diagonales fixée par une extrémité sur le bâti (1), l'autre extrémité comportant des moyens destinés à solidariser ladite fibre optique à aligner, les deux extrémités de son autre diagonale constituant chacune un point d'appui d'un moyen de déplacement (20) permettant de déformer la section droite du parallélépipède.

2.  Dispositif selon la revendication 1, caractérisé en ce que la section des lames minces décroit depuis chaque extrémité jusqu'à la zone située à égale distance des extrémités.

3.  Dispositif selon la revendication 2, caractérisé en ce que la loi de décroissance de la section des lames est telle que la contrainte dans le matériau soit à peu près la même dans toute section droite de la lame.

4.  Dispositif selon l'une des revendications 1 à 3, caractérisé en ce que chaque face du parallélépipède est constituée par une seule lame mince (14A).

5.  Dispositif selon l'une des revendications 1 à 3, caractérisé en ce que chaque face du parallélépipède est constituée de deux lames minces (14B) parallèles dont les profils sont symétriques l'un de l'autre par rapport au plan équidistant des deux lames.

6.  Dispositif selon l'une des revendications précédentes, caractérisé en ce que, entre chaque extrémité d'une diagonale constituant un point d'appui et chaque moyen de déplacement (20), est intercalé un élément flexible (15) sensiblement parallèle à une lame mince.

**Claims**

1.  A device for displacing the end of an optical fiber (6) along two orthogonal axes, the device enabling said optical fiber (6) to be aligned with another optical component (4) and comprising a frame (1) on which the optical component (4) is maintained, and a non-hinged deformable solid (10A, 10B) which has thin blades (14A, 14B) and on which the optical fiber (6) to be aligned is fixed, the deformable solid being made as a single part, characterized in that the thin blade-shaped portions (14A, 14B) of the solid are disposed along the faces of a box-shape whose cross-section at rest is square and is perpendicular to the axis of the optical fiber (6), one of the ends of one diagonal of this box-shape being fixed to the frame (1), the other end comprising means to fix said optical fiber to be aligned, while the two ends of its other diagonal each constitute a thrust point for displacement means (20) enabling the cross-section of the box-shape to be deformed.

6

2. A device according to claim 1, characterized in that the cross-sections of the thin blades taper from each end towards a region situated at equal distance from both ends.

3. A device according to claim 2, characterized in that the mathematical law by which the cross-sections of the blades taper is such that the stress in the material is substantially the same at any cross-section of the blade.

4. A device according to any one of claims 1 to 3, characterized in that each face of the box-shape is constituted by a single thin blade (14A).

5. A device according to any one of claims 1 to 3, characterized in that each face of the box-shape is constituted by two parallel thin blades (14B) whose profiles are symmetrical to each other with respect to a plane equidistant from both blades.

6. A device according to any preceding claim, characterized in that a flexible element (15) extending substantially parallel to a thin blade is interposed between each end of a diagonal constituting a thrust point and each displacement means (20).

**Patentansprüche**

1. Vorrichtung zur Verschiebung des Endes einer Lichtleitfaser (6) gemäß zwei orthogonalen Achsen, um diese Lichtleitfaser (6) mit einem anderen optischen Element (4) in Flucht zu bringen, mit einem Gerüst (1), auf dem das optische Element (4) gehalten werden kann, und einem verformbaren nicht-gelenkigen Körper (10A, 10B), der dünne Lamellen (14A, 14B) aufweist und auf dem die zu fluchtende Lichtleitfaser (6) befestigt werden kann, wobei der verformbare Körper aus einem Stück besteht, dadurch gekennzeichnet, daß die Bereiche des verformbaren Körpers in Form von dünnen Lamellen (14A, 14B) entlang den Seiten eines Parallelepipeds angeordnet sind, dessen Querschnitt in Ruhestellung quadratisch ist und senkrecht zur Achse der Lichtleitfaser (6) liegt, die auf ihm befestigt werden soll, sowie mit dem Ende einer seiner Diagonalen auf dem Gerüst (1) befestigt ist, während das andere Ende Mittel aufweist, die diese auszurichtende Lichtleitfaser festhalten, wobei die beiden Enden seiner anderen Diagonalen je einen Ansatzpunkt für ein Verschiebemittel (20) bilden, das die Verformung des Querschnitts des Parallelepipeds erlaubt.

2. Vorrichtung nach Anspruch 1, dadurch gekennzeichnet, daß der Querschnitt der dünnen Lamellen von jedem Ende bis zu der Zone abnimmt, die gleichen Abstand von den Enden aufweist.

3. Vorrichtung nach Anspruch 2, dadurch gekennzeichnet, daß die Abnahmefunktion des Querschnitts der Lamellen so gewählt ist, daß die Beanspruchung im Material in jedem Querschnitt der Lamelle in etwa gleich ist.

4. Vorrichtung nach einem der Ansprüche 1 bis 3, dadurch gekennzeichnet, daß jede Seite des Parallelepipeds aus einer einzigen dünnen Lamelle (14A) besteht.

5. Vorrichtung nach einem der Ansprüche 1 bis 3, dadurch gekennzeichnet, daß jede Seite des Parallelepipeds aus zwei dünnen parallelen Lamellen (14B) besteht, deren Profile symmetrisch zueinander in bezug auf die zu beiden Lamellen äquidistante Ebene sind.

6. Vorrichtung nach einem der vorhergehenden Ansprüche, dadurch gekennzeichnet, daß zwischen jedem Ende einer Diagonale, das einen Ansatzpunkt bildet, und jedem Verschiebemittel (20) ein biegsames Element (15) eingefügt ist, das im wesentlichen parallel zu einer dünnen Lamelle verläuft.

# FIG.1

# FIG.2

# FIG.3

# FIG.4

# FIG.5